# EUROPÄISCHE PATENTSCHRIFT

(11) **EP 4 414 156 B1**
(45) Veröffentlichungstag und Bekanntmachung des Hinweises auf die Patenterteilung: **14.01.2026**
(21) Anmeldenummer: 24156263.6
(22) Anmeldetag: 07.02.2024
(51) Int. Cl.: B29C 49/78, B29C 49/12

(54) **VERFAHREN UND VORRICHTUNG ZUR HERSTELLUNG VON BEHÄLTERN AUS VORFORMLINGEN**
METHOD AND DEVICE FOR PRODUCING CONTAINERS FROM PREFORMS
PROCÉDÉ ET DISPOSITIF DE FABRICATION DE RÉCIPIENTS À PARTIR DE PRÉFORMES

(30) Priorität: 08.02.2023 DE 102023103050
(43) Veröffentlichungstag der Anmeldung: 14.08.2024
(73) Patentinhaber: KHS GmbH, 44143 Dortmund (DE)
(72) Erfinder: Ulutürk, Deniz, 22761 Hamburg (DE); Zimmering, Bernd, 22111 Hamburg (DE)
(74) Vertreter: Eisenführ Speiser

(56) Entgegenhaltungen:
- EP-B1- 2 263 855
- EP-B1- 3 037 242
- EP-B1- 3 541 599
- EP-B1- 3 681 692

## Beschreibung

Die Erfindung betrifft ein Verfahren zur Herstellung von Behältern aus Vorformlingen. Ferner betrifft die Erfindung eine Vorrichtung zur Herstellung von Behältern aus Vorformlingen sowie eine Verwendung einer solchen Vorrichtung.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Möglichkeiten der Temperierung der Vorformlinge sind beispielsweise in der DE 23 52 926 A1 erläutert. Unter Temperierung oder thermischer Konditionierung wird dabei verstanden, dass der Vorformling auf eine für die Blasumformung geeignete Temperatur erwärmt und dem Vorformling ggf. ein Temperaturprofil in Längsrichtung und/oder in Umfangsrichtung und/oder in radialer Richtung aufgeprägt wird. Die Blasformung von Behältern aus Vorformlingen unter zusätzlicher Verwendung einer Reckstange ist ebenfalls bekannt.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammenzufassen, wobei weiterhin das Blasformen und das Füllen an gesonderten Maschinenkomponenten und zeitlich nacheinander erfolgen. Vor dem Füllen der Behälter mit dem vorgesehenen Produkt oder Füllgut kann außerdem eine Beschichtung auf der Behälterinnenseite mittels einer Beschichtungseinrichtung aufgetragen werden. Nach dem Füllen der Behälter können die Behälter in einer Etikettierstation mit Etiketten versehen werden.

Es wurde weiterhin bereits vorgeschlagen, Behälter, insbesondere auch in Form von Flaschen, aus thermisch konditionierten bzw. temperierten Vorformlingen herzustellen und dabei gleichzeitig mit einem flüssigen Füllgut zu befüllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter umgeformt wird. Derartige Verfahren, bei denen ein gleichzeitiges Formen und Füllen des jeweiligen Behälters erfolgt, können auch als hydraulische Umformverfahren oder als hydraulische Behälterformung bezeichnet werden.

Auch hier ist es bekannt, diese Umformung durch den Einsatz einer Reckstange zu unterstützen. Auch hier wird der Vorformling vor dem Form- und Füllvorgang zunächst temperaturkonditioniert, das heißt auf eine für die hydraulische Umformung geeignete Temperatur erwärmt und ggf. ein Temperaturprofil aufgeprägt.

Bei einem Formen der Behälter aus den Vorformlingen durch das Füllgut selbst, d.h. unter Verwendung des Füllgutes als hydraulisches Druckmedium, wird für das Formen und Füllen der Behälter nur noch eine Maschine benötigt, die dafür allerdings eine erhöhte Komplexität aufweist. Ein Beispiel für eine solche Maschine zeigt die US 7,914,726 B2. Ein weiteres Beispiel zeigt die DE 10 2010 007 541 A1.

Aus EP3037242B1 ist ein Verfahren zum Umformen von Kunststoffvorformlingen zu Kunststoffflaschen bekannt, wobei mittels einer Messeinrichtung während eines Blasvorgangs eine Wanddicke des Kunststoffbehälters gemessen wird und die Messeinrichtung die Messwerte an eine Regelungs- und/oder Steuerungseinrichtung ausgibt. Durch die Regelungs- und/oder Steuerungseinrichtung wird die Reckgeschwindigkeit der Reckstange während des Blasvorgangs zur Einstellung einer Wanddicke der Kunststoffflaschen individuell für jede Blasstation variiert.

Bei der Behälterformung mit einer Vorrichtung, insbesondere einer Vorrichtung die mehrere Umformstationen aufweist, besteht eine wichtige Qualitätsanforderung darin, möglichst identische Behälter herzustellen, die untereinander keine oder nur in engen Toleranzgrenzen Abweichungen in ihren Behältereigenschaften wie der Materialverteilung der Behälterwandung aufweisen.

Einen wesentlichen Einfluss auf die Behältereigenschaften hat die thermische Konditionierung bzw. die Temperierung der Vorformlinge, bevor die Vorformlinge in den Umformstationen in Behälter umgeformt werden.

Ein Problem bei bekannten Verfahren und Vorrichtungen zur Herstellung von Behältern aus thermisch konditionierten Vorformlingen besteht darin, dass wenn ein Vorformling beispielsweise abweichend von einer zuvor definierten Bahn an der Heizstrecke entlang bewegt wird oder ein Vorformling abweichend von einer zuvor definierten Erwärmung erwärmt wird, eine unerwünschte Abweichung in den Behältereigenschaften, wie beispielsweis der optimalen Materialverteilung der Behälterwandung, auftreten kann. Solche unerwünschten Abweichungen können insbesondere zyklisch auftreten und beispielsweise bedingt sein durch ein verbogenes Kettenglied in der Transportvorrichtung oder durch einen verbogenen Kopfreflektor in der Heizstrecke.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, die es ermöglichen, die Varianz zwischen Behältern, die aus voneinander abweichend konditionierten Vorformlingen hergestellt werden, möglichst gering zu halten.

Gemäß einem ersten Aspekt wird die Aufgabe gelöst durch ein Verfahren mit den Merkmalen des Anspruchs 1. Danach ist ein Verfahren zur Herstellung von Behältern aus Vorformlingen vorgesehen, umfassend folgende Schritte: Bewegen der Vorformlinge relativ zu einer Temperiervorrichtung mittels einer Transportvorrichtung mit mehreren Transportelementen, wobei die Vorformlinge jeweils an einem der Transportelemente angeordnet sind, wobei die Transportelemente in einem Herstellungsbetrieb auf einer umlaufenden Bahn zyklisch mit einer Umlauffrequenz entlang der Temperiervorrichtung bewegt werden, Temperieren der Vorformlinge mittels der Temperiervorrichtung, Ermitteln von Ist-Werten für die Vorformlinge und/oder für die aus den Vorformlingen hergestellten Behälter und/oder von den Umformungsvorgang charakterisierenden Kenngrößen mittels einer Messeinrichtung.

Erfindungsgemäß ist vorgesehen, dass das Verfahren folgende Schritte umfasst: Ermitteln von Abweichungen zwischen den Ist-Werten und einem zuvor definierten Soll-Wert oder einem zuvor definierten Soll-Bereich, Feststellen, ob eine mit der Umlauffrequenz der Transportelemente zyklisch auftretende Abweichung zwischen den Ist-Werten und dem Soll-Wert oder dem Soll-Bereich vorliegt, Herstellen einer Korrelation zwischen der zyklisch auftretenden Abweichung und einem zugeordneten Transportelement, Ermitteln, welcher Eingriff in einen Umformprozess erforderlich ist, um die zyklisch auftretende Abweichung auszugleichen oder zu kompensieren, Anwenden des Eingriffs mittels Anpassen mindestens eines Prozessparameters für Umformprozesse, in denen Vorformlinge, die an dem zugeordneten Transportelement angeordnet waren, zu einem Behälter umgeformt werden.

Es wird also eine Korrelation zwischen einer zyklischen Abweichung zwischen den Ist-Werten und dem Soll-Wert oder dem Soll-Bereich und einem zugordneten Transportelement hergestellt und daraufhin mindestens ein Prozessparameter für die Umformprozesse zur Umformung der Vorformlinge in Behälter derart angepasst, dass Vorformlinge, die an dem zugeordneten Transportelement angeordnet waren, zu einem Behälter so umgeformt werden, dass die zyklisch auftretende Abweichung ausgeglichen oder kompensiert wird.

Die Vorformlinge werden relativ zu der Temperiervorrichtung mittels einer Transportvorrichtung mit mehreren Transportelementen bewegt. Die Vorformlinge werden vorzugsweise jeweils an einem der Transportelemente gehalten. Die Transportelemente werden vorzugsweise in einem Herstellungsbetrieb, in dem Behälter aus Vorformlingen hergestellt werden, auf der umlaufenden Bahn zyklisch mit einer Umlauffrequenz entlang der Temperiervorrichtung bewegt, wobei vorzugsweise jeder Vorformling einmal an der Temperiervorrichtung vorbeibewegt wird. Insbesondere wird mit den Transportelementen jeweils in einem Umlauf ein Vorformling an der Temperiervorrichtung vorbeigeführt, also durch die Temperiervorrichtung hindurchgeführt. Die Vorformlinge werden dabei mittels der Temperiervorrichtung temperiert. Die Temperiervorrichtung ist vorzugsweise als Heizstrecke ausgebildet, die insbesondere entlang eines Abschnitts der Transportvorrichtung angeordnet ist, sodass die Vorformlinge an der Temperiervorrichtung vorbei und/oder durch die Temperiervorrichtung hindurchgeführt werden können. Beim nächsten Umlauf werden dann vorzugsweise jeweils andere Vorformlinge an der Temperiervorrichtung vorbeigeführt.

Die Vorformlinge werden vorzugsweise von der Transportvorrichtung, beispielsweise mittels eines Übergaberades an mindestens eine Umformstation übergeben. Mittels einer solchen mindestens einen Umformstation kann dann in einem Umformungsvorgang ein Behälter aus dem Vorformling geformt werden. Aus einer solchen Umformstation kann dann nach einem Umformungsvorgang ein Behälter entnommen werden. Vorzugsweise sind mehrere Umformstationen vorgesehen.

Das Ermitteln von Ist-Werten kann insbesondere mittels Messung von Eigenschaften der Vorformlinge und/oder mittels Messung von Eigenschaften der aus den Vorformlingen hergestellten Behälter und/oder mittels Messung der den Umformungsvorgang charakterisierenden Kenngrößen erfolgen.

Unter einem Ermitteln von Ist-Werten für die Vorformlinge ist insbesondere zu verstehen, dass an den Vorformlingen jeweils eine Messung zur Bestimmung einer Eigenschaft des Vorformlings vorgenommen wird, wobei anhand der Messung dieser Eigenschaft ein Ist-Wert bestimmt wird. Das Ermitteln von Ist-Werten für Vorformlinge kann beispielsweise eine Temperaturmessung nach dem Temperieren der Vorformlinge erfassen. Der Ist-Wert ist dann insbesondere eine an dem Vorformling gemessene Temperatur des Vorformlings nach dem Temperieren des Vorformlings.

Unter einem Ermitteln von Ist-Werten für die aus den Vorformlingen hergestellten Behälter ist insbesondere zu verstehen, dass an den aus den Vorformlingen hergestellten Behältern jeweils eine Messung zur Bestimmung einer Eigenschaft des Behälters vorgenommen wird, wobei anhand der Messung dieser Eigenschaft ein Ist-Wert bestimmt wird. Das Ermitteln von Ist-Werten für die aus den Vorformlingen hergestellten Behälter kann beispielsweise eine Wanddickenmessung des Behälters umfassen. Der Ist-Wert ist dann insbesondere eine an dem Behälter gemessene Wanddicke.

Unter einem Ermitteln von Ist-Werten von den Umformungsvorgang charakterisierenden Kenngrößen ist insbesondere zu verstehen, dass eine Kenngröße des Umformungsvorgangs gemessen wird, wobei anhand der Messung dieser Kenngröße ein Ist-Wert bestimmt wird. Den Umformungsvorgang charakterisierenden Kenngrößen können insbesondere solche Kenngrößen sein, die den Umformungsvorgang vom Vorformling zum Behälter betreffen und einen Einfluss auf den Umformungsvorgang haben. Das Ermitteln von Ist-Werten von den Umformungsvorgang charakterisierenden Kenngrößen kann beispielsweise Messung der Reckkraft, also insbesondere der Kraft, die für die Reckweg der Reckstange in den Vorformling hinein benötigt wird, umfassen. Der Ist-Wert ist dann insbesondere eine beim Umformprozess gemessene Reckkraft sein. Das Ermitteln von Ist-Werten von den Umformungsvorgang charakterisierenden Kenngrößen kann beispielsweise auch ein Zeitpunkt oder ein Ort des Anlegens der Behälterblase an die Blasform oder ein Bestimmen eines Blasdruckes in einer Blasstation, die den Blasdruck bereitstellt, umfassen.

Wenn die Ist-Werte ermittelt wurden, können diese mit einem zuvor definierten Soll-Wert oder einem zuvor definierten Soll-Bereich verglichen werden. Es werden dann Abweichungen zwischen den Ist-Werten und dem zuvor definierten Soll-Wert und/oder dem zuvor definierten Soll-Bereich ermittelt. Der Soll-Wert oder Soll-Bereich kann insbesondere in einem Datenspeicher hinterlegt sein. Der Soll-Wert und/oder der Soll-Bereich kann auch einen Soll-Wert und/oder einen Toleranzbereich umfassen. Der Soll-Wert kann beispielsweise eine Soll-Temperatur sein. Der Soll-Bereich kann beispielsweise ein Soll-Temperaturbereich sein.

Das Verfahren umfasst ein Feststellen, ob eine mit der Umlauffrequenz der Transportelemente zyklisch auftretende Abweichung zwischen den Ist-Werten und dem Soll-Wert oder dem Soll-Bereich vorliegt. Dazu wird insbesondere nach einer Abweichung gesucht, die zyklisch mit einer Frequenz auftritt, die der Umlauffrequenz entspricht. Wird eine derartige zyklische Abweichung ermittelt, dann kann mittels eines Eingriffs in einen Umformprozess der aus dieser zyklischen Abweichung resultierende Fehler ausgeglichen oder kompensiert werden. Dazu wird vorzugsweise zunächst eine Korrelation hergestellt zwischen der zyklisch mit der Umlauffrequenz auftretenden Abweichung und dem Transportelement, an dem die Vorformlinge angeordnet waren, denen die Abweichungen zuzuordnen sind, beispielsweise mittels Messung an diesen Vorformlingen und/oder mittels Messung von Kenngrößen bei der Umformung und/oder mittels Messung an den aus diesen Vorformlingen hergestellten Behältern.

Unter dem zugeordneten Transportelement ist insbesondere ein solches Transportelement zu verstehen, an dem die Vorformlinge angeordnet waren, für die oder für die daraus hergestellten Behälter jeweils Ist-Werte bestimmt wurden, die von dem Soll-Wert oder dem Soll-Bereich abweichen, für die also eine Abweichung ermittelt wurde.

Insbesondere nach Herstellung einer Korrelation kann ein Eingriff mittels Ändern mindestens eines Prozessparameters für die Umformung von den Vorformlingen, die an dem zugeordneten Transportelement angeordnet waren, in die Behälter vorgenommen werden.

Ein erster Vorteil eines solchen Verfahrens besteht darin, dass unerwünschte Abweichungen in der Materialverteilung von aus Vorformling hergestellten Behältern vermieden werden können. Somit ist es mittels der beschriebenen Kompensation möglich, trotz eines zyklisch auftretenden Fehlers unerwünschte Abweichungen in den Eigenschaften der hergestellten Behälter zu vermeiden.

Ein weiterer Vorteil eines solchen Verfahrens besteht darin, dass die Bestimmung der Ist-Werte an unterschiedlichen Zeitpunkten und/oder Orten des Herstellungsprozesses erfolgen können, wodurch die hier beschriebene technische Lehre sehr flexibel anpassbar und vielseitig einsetzbar ist.

Ein weiterer Vorteil eines solchen Verfahrens besteht darin, dass insbesondere bei einer ungleichmäßigen Temperierung der Vorformlinge ein zyklisch auftretender Fehler automatisch kompensiert werden kann, ohne dass zuvor eine Vielzahl von Behältern mit nicht optimalen Eigenschaften hergestellt werden und ohne dass der Herstellungsbetrieb unterbrochen werden muss.

Vorteilhafte Ausführungsformen und Konkretisierungen dieser allgemeinen erfindungsgemäßen technischen Lehre sind in den Unteransprüchen angegeben oder ergeben sich aus der Figurenbeschreibung.

Gemäß einer besonders bevorzugten Ausführungsform ist vorgesehen, dass der mindestens eine Prozessparameter mittels einer Steuerungseinheit verstellt wird.

Die Steuerungseinheit kann insbesondere eine zur Steuerung des Umformprozesses vorgesehene Maschinensteuerung sein oder in eine solche Maschinensteuerung integriert sein. Mit der Steuerungseinheit können vorzugsweise verschiedene Prozessparameter, die den Umformungsprozess betreffen, verstellt werden.

Es ist besonders bevorzugt, dass das Ermitteln der Ist-Werte jeweils eine Messung einer Temperatur oder eines Temperarturprofils des temperierten Vorformlings umfasst, insbesondere mittels eines Pyrometers, wobei vorzugsweise der Ist-Wert eine gemessene Temperatur oder ein gemessenes Temperaturprofil des temperierten Vorformlings ist und der Soll-Wert eine Soll-Temperatur oder ein Soll-Temperaturprofil und/oder der Soll-Bereich ein Soll-Temperaturbereich oder ein Soll-Temperaturprofilbereich ist.

Das Ermitteln der Ist-Werte kann insbesondere eine Temperaturmessung umfassen, beispielsweise mittels eines optischen Temperatursensors. Das Ermitteln der Ist-Werte kann insbesondere mittels eines getakteten Pyrometers erfasst werden. Das Ermitteln der Ist-Werte kann auch eine Identifizierung des jeweiligen Transportelements umfassen. Dadurch kann eine Zuordnung zwischen gemessener Temperatur und dem Transportelement vereinfacht werden.

Unter einem Temperaturprofil ist insbesondere eine Temperaturverteilung, vorzugsweise entlang der Längsachse des Vorformlings, zu verstehen. Eine Messung eines solchen Temperaturprofils kann insbesondere eine Messung der Temperatur auf mehreren Höhenebenen des Vorformlings umfassen.

Vorzugsweise umfasst das Ermitteln der Ist-Werte jeweils eine Messung einer Reckkraft, die beim Recken des Vorformlings entlang seiner Längsachse mit einer Reckstange aufgewendet wird, wobei vorzugsweise der Ist-Wert eine gemessene Reckkraft ist und der Soll-Wert eine Soll-Reckkraft ist und/oder der Soll-Bereich ein Soll-Kraftbereich ist.

Unter einer Reckkraft ist insbesondere eine Kraft zu verstehen, mit der die Reckstange den Vorformling entlang seiner Längsachse reckt. Die Reckkraft kann insbesondere mittels eines Kraftsensors, insbesondere mittels eines Kraftaufnehmers, der ausgebildet ist, um die Reckkraft zu messen, ermittelt werden. Bei linearmotorisch angetriebenen Reckstangen oder vergleichbaren elektrischen Antrieben kann z.B. auch die Leistungsaufnahme des Antriebs erfasst werden.

Vorzugsweise umfasst das Ermitteln der Ist-Werte jeweils eine Messung eines Ausformdrucks, der beim Umformen des Vorformlings in einen Behälter aufgebracht wird, wobei vorzugsweise der Ist-Wert ein gemessener Umformdruck ist und der Soll-Wert ein Soll-Umformdruck ist und/oder der Soll-Bereich ein Soll- Umformdruckbereich ist.

Der Ausformdruck kann insbesondere der Druck des Fluids, mit dem der Vorformling bzw. der aus dem Vorformling hergestellte Behälter während des Umformprozesses beaufschlagt wird, während des Umformprozesses sein.

Es ist besonders bevorzugt, dass der mindestens eine Prozessparameter ausgewählt ist aus der folgenden Gruppe: ein Vorblasdruck, insbesondere im Bereich von 5 bar bis 25 bar; ein Zeitpunkt zum Aufbringen eines Vorblasdrucks, insbesondere zum Öffnen eines Vorblasdruckventils, und/oder eine Zeitdauer des Aufbringens des Vorblasdrucks; ein Parameter, der eine Reckbewegung einer Reckstange beeinflusst, insbesondere eine Reckgeschwindigkeit, mit der der Vorformling entlang seiner Längsachse mit der Reckstange gereckt wird; ein Zeitabstand zwischen einem Öffnen eines Vorblasdruckventils zum Aufbringen eines Vorblasdrucks und einem Beginn einer Reckbewegung, die von einer Reckstange ausgeführt wird; eine definierte Position der Reckstange, wobei die definierte Position der Reckstange insbesondere einen bestimmten Abstand zum Ende der Reckbewegung und/oder zum Boden der Blasformkavität aufweist; eine Menge, insbesondere ein Volumen, eines in den Vorformling einströmenden Gases.

Diese Parameter sind vorzugsweise wie folgt einem Umformprozess zuzuordnen. Der Umformprozess kann insbesondere mehrstufig erfolgen. Dabei wird zunächst ein niedriger Vorblasdruck, auch P1-Druck genannt, aufgebracht. Anschließend wird ein Zwischenblasdruck, auch PB-Druck genannt, aufgebracht, der höher als der Vorblasdruck ist. Dann wird ein Hauptblasdruck, auch P2-Druck genannt, aufgebracht, der höher als der Zwischenblasdruck sein kann. Es können auch noch weitere Druckstufen vor, nach oder zwischen diesen Drücken aufgebracht werden. Denkbar ist auch, nur mit einem Vorblasdruck und einem Hauptblasdruck zu arbeiten. Die Zeitpunkte, zu denen der Vorblasdruck angelegt wird und zu denen danach auf den Zwischenblasdruck und/oder den Hauptblasdruck umgeschaltet wird, sind vorzugsweise wichtige Prozessparameter.

Vorzugsweise kann auch die Menge, also insbesondere das Volumen, von einströmendem Gas ein Prozessparameter sein, der angepasst werden kann, wobei eine Anpassung der Menge insbesondere einen Einfluss darauf hat, wie schnell die Umformung in Reckrichtung im Verhältnis zur Umformung in radialer Richtung erfolgt. Vorzugsweise soll der Boden des Vorformlings bzw. der entstehenden Behälterblase aber immer noch zuverlässig von der Reckstange geführt werden, damit die Behälterblase nicht seitlich ausbrechen kann.

Insbesondere der Zeitpunkt des Öffnens des Vorblasdruckventils, das auch als P1-Ventil bezeichnet werden kann, kann gegenüber dem Beginn des Reckens durch die Reckstange variiert werden. Dadurch lässt sich vorzugsweise beeinflussen, ob die Umformung des Vorformlings stärker in der Reckrichtung der Reckstange erfolgt oder in radialer Richtung.

Es ist besonders bevorzugt, dass das Anpassen mindestens eines Prozessparameters ein Anpassen eines Startzeitpunkts, zu dem ein Vorblasdruck in dem Vorformling aufgebracht wird, umfasst, vorzugsweise mittels Steuerung eines Vorblasdruckventils. Der Startzeitpunkt kann insbesondere in Abhängigkeit von einer definierten Position der Reckstange ausgelöst werden, wobei die definierte Position z.B. ein bestimmter Abstand der Reckstange bzw. der Reckstangenspitze relativ zu einer Endposition sein kann, z.B. der Abstand bis zum Endpunkt der Reckbewegung und/oder bis zum Boden der Blasformkavität.

Es ist ferner besonders bevorzugt, dass das Anpassen mindestens eines Prozessparameters ein Anpassen einer definierten Position der Reckstange ist, wobei die definierte Position z.B. ein bestimmter Abstand der Reckstange bzw. der Reckstangenspitze relativ zu einer Endposition sein kann, z.B. der Abstand bis zum Endpunkt der Reckbewegung und/oder bis zum Boden der Blasformkavität.

Ein Anpassen des Startzeitpunkts, zu dem der Vorblasdruck aufgebracht wird, kann insbesondere mittels einer Steuerung des Zeitpunkts, zu dem das Vorblasdruckventil geöffnet wird, insbesondere bezogen auf den Zeitablauf des Umformprozesses, erreicht werden.

Es ist besonders bevorzugt, dass die Vorformlinge ein thermoplastisches Material, insbesondere PET, umfassen oder daraus bestehen.

Es ist besonders bevorzugt, dass der Umformprozess ein gleichzeitiges Befüllen des aus dem Vorformling umgeformten Behälters mit flüssigem Füllgut umfasst.

Vorzugsweise erfolgt das Umformen der Vorformlinge in einen Behälter jeweils zumindest abschnittsweise gleichzeitig mit der Befüllung des Behälters mit Füllgut, wobei insbesondere das Füllgut als Umformfluid für das Umformen des Vorformlings in den Behälter dient.

Es ist besonders bevorzugt, dass die Transportelemente als Transportdorne ausgebildet sind, die an einer umlaufenden Förderkette angeordnet sind, wobei die Transportdorne bevorzugt wenigstens in einem Teilumlaufbereich der Förderkette zu einer Eigendrehung um ihre Längsachse angetrieben werden.

Die Transportelemente, insbesondere in Form von Transportdornen, sind vorzugsweise Bestandteil von Gliedern einer umlaufenden Kette, also einer umlaufenden Förderkette, oder werden an diesen fixiert und mit diesen durch die Temperiervorrichtung gefördert.

Es ist besonders bevorzugt, dass die Temperiervorrichtung Heizelemente, insbesondere Infrarot-Strahler und/oder Licht emittierende Dioden und/oder Nahinfrarot-Strahler, umfasst.

Mittels der Heizelemente kann vorzugsweise eine elektromagnetische Strahlung, insbesondere Wärmestrahlung, bereitgestellt werden, mit der eine Temperierung der Vorformlinge ermöglicht wird.

Gemäß einem weiteren Aspekt wird die eingangs genannte Aufgabe gelöst durch eine Vorrichtung zur Herstellung von Behältern aus Vorformlingen, wobei die Vorrichtung vorzugsweise ausgebildet ist zur Ausführung eines wie hier beschriebenen Verfahrens, die Vorrichtung umfassend eine Transportvorrichtung mit mehreren Transportelementen, wobei die Transportvorrichtung ausgebildet ist, um die Vorformlinge relativ zu einer Temperiervorrichtung zum Temperieren der Vorformlinge zu bewegen, wobei die Transportvorrichtung ausgebildet ist, um die Transportelemente in einem Herstellungsbetrieb auf einer umlaufenden Bahn zyklisch mit einer Umlauffrequenz entlang der Temperiervorrichtung zu bewegen, eine Messeinrichtung, die ausgebildet ist, um Ist-Werte für die Vorformlinge und/oder für die aus den Vorformlingen hergestellten Behälter und/oder von den Umformungsvorgang charakterisierenden Kenngrößen zu ermitteln, eine Steuerungseinheit, die ausgebildet ist, um Abweichungen zwischen den Ist-Werten und einem zuvor definierten Soll-Wert oder einem zuvor definierten Soll-Bereich zu ermitteln, festzustellen, ob eine mit der Umlauffrequenz der Transportelemente zyklisch auftretende Abweichung zwischen den Ist-Werten und dem Soll-Wert oder dem Soll-Bereich vorliegt, eine Korrelation herzustellen zwischen der zyklisch auftretenden Abweichung und einem zugeordneten Transportelement, zu ermitteln, welcher Eingriff in einen Umformprozess erforderlich ist, um die zyklisch auftretende Abweichung auszugleichen oder zu kompensieren, den Eingriff anzuwenden mittels Anpassen mindestens eines Prozessparameters für Umformprozesse, in denen Vorformlinge, die an dem zugeordneten Transportelement angeordnet waren, zu einem Behälter umgeformt werden.

Vorzugsweise ist die Vorrichtung in Form einer Rotationsmaschine ausgebildet, wobei bevorzugt in einem Karussellbetrieb ein kontinuierlicher Materialtransport erfolgt.

Gemäß einem weiteren Aspekt wird die eingangs genannte Aufgabe gelöst durch eine Verwendung einer wie hier beschriebenen Vorrichtung zum Herstellen von mit flüssigem Füllgut befüllten Behältern aus thermisch konditionierten Vorformlingen mittels Einleiten eines Füllguts unter Druck in die Vorformlinge, insbesondere zum Herstellen von mit flüssigem Füllgut, beispielsweise Trinkwasser, befüllten Flaschen aus einem thermoplastischen Material, insbesondere umfassend oder bestehend aus PET.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine stark schematisierte Darstellung einer Vorrichtung zur Durchführung eines Verfahrens zur Herstellung von Behältern aus Vorformlingen;
- Fig. 2:: eine schematische Darstellung einer beispielhaften Messkurve für die Temperatur von temperierten Vorformlingen;
- Fig. 3:: eine schematische Darstellung eines Verfahrens zur Herstellung von Behältern aus Vorformlingen.

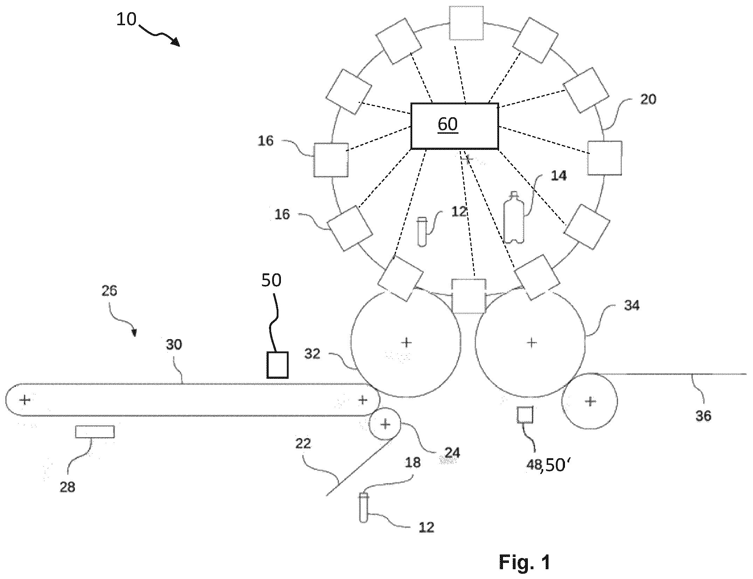

Fig. 1 zeigt eine stark schematisierte Darstellung einer Vorrichtung 10 zur Durchführung eines Verfahrens zur Herstellung von Behältern 14 aus Vorformlingen 12. Die Darstellung zeigt die bevorzugte Ausbildung einer solchen Vorrichtung 10 in der Art einer Rotationsmaschine mit einem, mehrere Umformstationen 16 tragenden, rotierenden Arbeitsrad 20. Im Bereich der Umformstationen 16 werden Vorformlinge 12 durch biaxiale Expansion in Behälter 14 umgeformt.

In einer typischen Ausgestaltung enthält eine gattungsgemäße Vorrichtung 10 zur Herstellung eines Behälters 14 eine Temperiervorrichtung 26 zur Temperierung bzw. thermischen Konditionierung der Vorformlinge 12. Wie vorliegend gezeigt, kann die Temperiervorrichtung 26 dem Arbeitsrad 20 vorgelagert sein, sodass die Vorformlinge 12 vor Erreichen der Umformstationen 16 erwärmt werden können. Von einer Zuführeinrichtung 22 können schematisch dargestellte Vorformlinge 12, die auch als Preforms bezeichnet werden, unter Verwendung eines Übergaberades 24 kontinuierlich der Temperiervorrichtung 26 zugeführt werden. Im Bereich der Temperiervorrichtung 26, in der die Vorformlinge 12 entlang einer Heizstrecke transportiert und dabei thermisch konditioniert werden, können die Vorformlinge 12 anwendungsabhängig mittels Transportelementen beispielsweise mit ihren Mündungsabschnitten in lotrechter Richtung nach oben oder in lotrechter Richtung nach unten transportiert werden.

Die Temperiervorrichtung 26 ist beispielsweise mit Heizelementen 28 ausgestattet, die entlang einer Transportvorrichtung 30 zur Ausbildung der Heizstrecke angeordnet sind. Als Transportvorrichtung 30 kann beispielsweise eine umlaufende Förderkette mit als Transportdornen ausgebildeten Transportelementen zur Halterung der Vorformlinge 12 verwendet werden. Als Heizelemente 28 eignen sich beispielsweise Infrarot-Strahler (IR-Strahler) oder Licht emittierende Dioden (LED) oder Naheinfrarot-Strahler (NIR-Strahler). Da solche Temperiervorrichtungen in vielfältiger Art im Stand der Technik bekannt sind und die konstruktiven Einzelheiten der Temperiervorrichtung für die vorliegende Erfindung nicht wesentlich sind, kann auf eine detailliertere Beschreibung verzichtet und auf den Stand der Technik verwiesen werden, insbesondere auf den Stand der Technik zu Temperiervorrichtungen von Blas- und von Streckblasmaschinen.

Nach der Temperierung der Vorformlinge werden mittels einer Messeinrichtung 50 Ist-Werte für die Vorformlinge 12 und/oder für die aus den Vorformlingen 12 hergestellten Behälter 14 und/oder von den Umformungsvorgang charakterisierenden Kenngrößen ermittelt. In dem in Fig. 1 gezeigten Ausführungsbeispiel werden die Ist-Werte für die Vorformlinge unmittelbar nach der Temperierung erfasst, wenn die Vorformlinge 12 noch an der Transportvorrichtung 30 angeordnet sind. Es ist aber auch möglich die Ist-Werte an einer anderen Position und/oder zu einem anderen Zeitpunkt im Herstellungsprozess zu ermitteln, beispielsweise während des Umformungsvorgangs und/oder nach der Umformung an den aus den Vorformlingen 12 hergestellten Behältern 14.

Nach einer ausreichenden Temperierung, auch thermische Konditionierung genannt, werden die Vorformlinge 12 von einem Übergaberad 32 zu einem rotationsfähig angeordneten, d.h. um eine vertikale Maschinenachse umlaufend antreibbaren Arbeitsrad 20 bzw. an Umformstationen 16 übergeben, die an dem Arbeitsrad 20 umfangsverteilt angeordnet sind. Das Arbeitsrad 20 ist mit einer Mehrzahl, also mindestens zwei solcher Umformstationen 16 ausgestattet. Für die biaxiale Expansion der Vorformlinge 12 im Bereich der Umformstationen 16 werden die Vorformlinge 12 mit einem unter Druck stehenden Formfluid befüllt. Als Formfluid kann ein Gas oder eine Flüssigkeit dienen.

In hydraulisch formenden Blasmaschinen, sogenannten Formfüllmaschinen, erfolgt im Bereich der Umformstationen 16 sowohl eine Umformung der Vorformlinge 12 in die schematisch dargestellten Behälter 14 als auch eine Befüllung der Behälter 14 mit dem vorgesehenen Füllgut. Das Formen jedes Behälters 14 erfolgt in Formfüllmaschinen vorzugsweise zeitgleich mit der Befüllung, wobei das Füllgut als Formfluid, also als Druckmedium für das Formen dient. In pneumatisch formenden Blas- und Streckblasmaschinen werden die Vorformlinge 12 im Bereich der Umformstationen 16 mit einem Blasgas gefüllt, das als Druckmedium für das Formen dient.

Das Arbeitsrad 20 läuft im Produktionsbetrieb kontinuierlich mit einer gewünschten Umlaufgeschwindigkeit um. Während eines Umlaufs erfolgt das Einsetzen eines Vorformlings 12 in eine Umformstation 16, die Expansion des Vorformlings 12 zu einem Behälter 14 und die Entnahme des Behälters 12 aus der Umformstation 16.

Die Umformstationen 16 können eine Reckstange aufweisen, die zur Unterstützung der axialen Streckung und Führung in den Vorformling 12 einfahrbar ist. Wenn die Umformstationen 16 eine Reckstange aufweisen, erfolgt während eines Umlaufes des Arbeitsrad 20 auch gleichzeitig eine Reckung der Vorformlinge 12.

Nach dem Formen und gegebenenfalls dem Füllen der Behälter 14 im Bereich des Arbeitsrades 20 werden die Behälter 14 von einem Entnahmerad 34 vom Arbeitsrad 20 entnommen, weitertransportiert und einer Ausgabestrecke 36 zugeführt. Vor dem Ausschleusen der Behälter 14 aus der Vorrichtung 10 werden die Behälter 14 vorzugsweise in einen Bereich eines Sensors 48 transportiert, der zumindest einige, vorzugsweise alle Behälter 14 kontinuierlich, also in einem Inline-Messverfahren, sensorisch erfasst, um mindestens eine Eigenschaft wie eine Materialverteilung der Behälterwand messtechnisch zu erfassen. Wie vorliegend angedeutet, kann der Sensor 48 zwischen dem Arbeitsrad 20 und dem Ausgabebereich 36 im Bereich des Entnahmerades 34 angeordnet sein.

Der Sensor 48 kann insbesondere auch als Messeinrichtung 50' dienen, mittels derer Ist-Werte die aus den Vorformlingen 12 hergestellten Behälter 14 ermittelt werden. Eine solche messtechnische Erfassung von Eigenschaften des fertiggestellten Behälters 14 kann kontaktlos oder kontaktbehaftet durchgeführt werden. In erster Linie ist bei der sensorischen Erfassung des fertiggestellten Behälters an eine Wandstärkemessung bzw. an eine Messung der Materialverteilung gedacht. Die Wanddicke oder Materialverteilung lässt sich beispielsweise durch optische, also insbesondere mit Lichtwellen arbeitende, und/oder akustische, also insbesondere mit Schallwellen arbeitende, Messverfahren durchführen. Es versteht sich, dass auch andere Eigenschaften, wie zum Beispiel die Oberflächenstruktur bzw. die Profilierung des fertiggestellten Behälters messtechnisch erfassbar sein können. Entsprechend können auch andere, an die zu erfassende Eigenschaft angepasste Messverfahren Anwendung finden. Es versteht sich weiter, dass nicht nur ein einziger Sensor, sondern auch mehrere Sensoren zur Erfassung von Eigenschaften des fertiggestellten Behälters 14 vorgesehen sein können. Durch eine Rückkopplung der mit dem Sensor 48 erfassten Eigenschaften eines mit einer bestimmten Umformstation 16 hergestellten Behälters 14 an die Steuerungseinheit 60 kann mithilfe der Steuereinrichtung 60 ein Vergleich zwischen den erfassten Eigenschaften des fertiggestellten Behälters 14 und Soll-Werten oder Soll-Bereichen, die insbesondere Behälterreferenzeigenschaften umfassen können, vorgenommen werden. Die Behälterreferenzeigenschaften können dazu in einem von der Steuerungseinheit 60 auslesbaren Speicher abgelegt sein.

Als Material für die Vorformlinge 12 können unterschiedliche thermoplastische Materialien verwendet werden. Beispielhaft seien Polyethylenterephthalat (PET), Polyethylen (PE), Polyethylennaphthalat (PEN) oder Polypropylen (PP) genannt. Die Dimensionierung sowie das Gewicht der Vorformlinge 12 sind an die Größe, das Gewicht und/oder an die Gestaltung der herzustellenden Behälter 14 angepasst.

Eine Handhabung der Vorformlinge 12 und/oder der Behälter 14 erfolgt vorzugsweise unter Verwendung von Zangen und/oder den Mündungsabschnitt wenigstens bereichsweise von innen oder von außen beaufschlagenden Klemm- oder Steckdornen. Solche Handhabungsmittel sind ebenfalls aus dem Stand der Technik hinlänglich bekannt und benötigen deshalb keiner detaillierteren Beschreibung.

Mindestens ein Prozessparameter für die Umformungsprozesse der Umformstationen 16 kann mittels einer Steuerungseinheit 60 verstellt werden. Die Steuerungseinheit 60 ist signaltechnisch mit den Umformstationen 16 verbunden (hier mittels gestrichelter Linien dargestellt).

Die Steuerungseinheit 60 ist eingerichtet und ausgebildet, anhand von vorgebbaren Steuerparametern Steuersignale über mindestens eine Steuerleitung an die Umformstationen 16 zu senden, sodass beispielsweise einer oder mehrere der folgenden Prozessparameter angepasst werden können: Ein Vorblasdruck, insbesondere im Bereich von 5 bar bis 25 bar; ein Hauptblasdruck, insbesondere im Bereich von 20 bar bis 40 bar; ein Zeitpunkt zum Aufbringen eines Vorblasdrucks, insbesondere zum Öffnen eines Vorblasdruckventils, und/oder eine Zeitdauer des Aufbringens des Vorblasdrucks; ein Parameter, der eine Reckbewegung einer Reckstange beeinflusst, insbesondere eine Reckgeschwindigkeit, mit der der Vorformling 12 entlang seiner Längsachse mit der Reckstange gereckt wird; ein Zeitabstand zwischen einem Öffnen eines Vorblasdruckventils zum Aufbringen eines Vorblasdrucks und einem Beginn einer Reckbewegung, die von einer Reckstange ausgeführt wird; eine definierte Position der Reckstange, wobei die definierte Position der Reckstange insbesondere einen bestimmten Abstand zum Ende der Reckbewegung und/oder zum Boden der Blasformkavität aufweist; eine Menge, insbesondere ein Volumen, eines in den Vorformling 12 einströmenden Gases.

Es bietet sich im Übrigen an, dass als Steuerungseinheit 60 die zur Steuerung der Vorrichtung 10 vorgesehene Maschinensteuerung verwendet wird. Die Steuerungseinheit 60 kann auch eine in die Maschinensteuerung integrierte Steuerungseinheit sein.

In Abhängigkeit von vorgegebenen Steuerparametern kann die Steuerungseinheit 60 Steuersignale auch beispielsweise an den Reckantrieb senden, um eine axiale Verschiebung der Reckstange 50 zu steuern, insbesondere auszulösen.

Nachdem die Ist-Werte ermittelt wurden, können die Ist-Werte mit einem zuvor definierten Soll-Wert oder einem zuvor definierten Soll-Bereich verglichen werden. Es werden dann die Abweichungen zwischen den Ist-Werten und einem zuvor definierten Soll-Wert oder einem zuvor definierten Soll-Bereich ermittelt. Anschließend wird festgestellt, ob eine mit der Umlauffrequenz der Transportelemente zyklisch auftretende Abweichung zwischen den Ist-Werten und dem Soll-Wert oder dem Soll-Bereich vorliegt. Wenn eine solche zyklisch auftretende Abweichung vorliegt, wird eine Korrelation zwischen der zyklisch auftretenden Abweichung und einem zugeordneten Transportelement der Transportvorrichtung 30 hergestellt. Dann wird ermittelt, welcher Eingriff in einen Umformprozess erforderlich ist, um die zyklisch auftretende Abweichung auszugleichen oder zu kompensieren. Der Eingriff wird mittels der Steuerungseinheit 60 gesteuert. Dabei wird mindestens ein Prozessparameter für Umformprozesse, in denen Vorformlinge 12, die an dem zugeordneten Transportelement angeordnet waren, zu einem Behälter 14 umgeformt werden, so angepasst, dass die zyklisch auftretende Abweichung kompensiert wird. Durch eine solche Kompensation können unerwünschte und insbesondere durch unterschiedliche Konditionierung der Vorformlinge bedingte Abweichungen in den Behältereigenschaften, wie der Behälterwanddicke, der hergestellten Behältern verringert oder ganz vermieden werden.

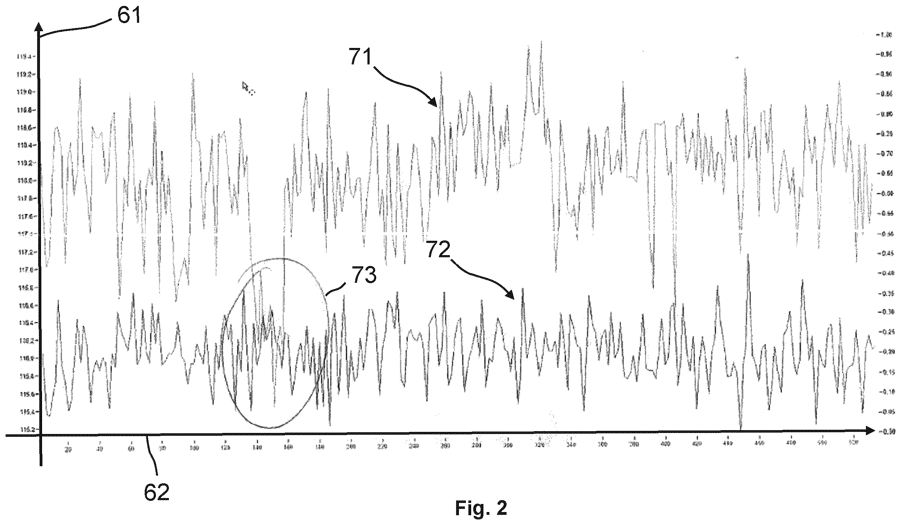

Fig. 2 zeigt eine schematische Darstellung einer beispielhaften Messkurve für die Temperatur von Vorformlingen 12. In dem in Fig. 2 gezeigten Diagramm ist die an den Vorformlingen gemessene Temperatur auf der vertikalen Achse 61 über die Nummern der Transportelemente, die auf der horizontalen Achse 62 aufgetragen sind, gezeigt. Die auf der Achse 61 aufgetragene Temperatur liegt in dem dargestellten Ausführungsbeispiel zwischen ca. 115 °C und ca. 120 °C. Die Transportelemente sind hier mit Nummern im Abstand von 20 benannt, also 20, 40, 60, 80, 100, 120, 140, usw.

Die Vorformlinge werden auf diesen ihnen fest zu geordneten Transportelementen durch die Temperiervorrichtung transportiert. Ein Transportelement bzw. die zugehörige Anbindung an das Transportsystem kann beispielsweise einen solchen Fehler aufweisen, dass der Vorformling nicht auf seiner optimalen Bewegungsbahn an der Temperiervorrichtung vorbeibewegt wird. Dies kann beispielsweise durch ein verbogenes Kettenglied der Transportvorrichtung oder beispielsweise durch einen verbogenen Kopfreflektor und eine daraus resultierende abweichende Erwärmung bedingt sein. Ein Kopfreflektor kann auch als Strahlungsblende bezeichnet werden, die z.B. als ein mit einem Transportelement der Transportvorrichtung mitlaufendes Element zur Abschirmung des Mündungsbereichs der Vorformlinge gegen Wärmestrahlung ausgeführt sein kann. Ein solcher Kopfreflektor bzw. eine solche Strahlungsblende kann beispielsweise wie in DE 10 2016 001 630 beschrieben ausgebildet sein.

In dem hier gezeigten Diagramm sind zwei Temperaturmesskurven von Vorformlingen, die in zwei parallel angeordneten Gassen entlang der Heizvorrichtung geführt werden, gezeigt. Details einer solchen mehrreihigen Führung der Vorformlinge im Bereich der Heizvorrichtung in mehreren, insbesondere zwei, parallelen Gassen ist beispielsweise in der Druckschrift EP 3284579 beschrieben. Die obere Kurve 71 zeigt die gemessene Temperatur der Vorformlinge in einer ersten Gasse und die untere Kurve 72 zeigt eine gemessene Temperatur der Vorformlinge in einer zweiten Gasse, die parallel zur ersten Gasse angeordnet ist, wobei die Temperatur in der ersten Gasse hier etwas höher ist.

In dem Diagramm ist für den Vorformling, der auf dem Transportelement mit der Nummer 140 angeordnet ist, eine Temperaturabweichung vom optimalen Temperaturbereich, also dem Soll-Bereich, in der zweiten Gasse zu erkennen. Denn die Temperatur weicht für den Vorformling, der an dem Transportelement mit der Nummer 140 angeordnet ist, deutlich nach unten hin ab, wie im Bereich 73 erkennbar. Der streckgeblasene Behälter, der aus diesem Vorformling geformt wird, weicht aufgrund der abweichenden Temperierung wiederum von seiner optimalen Materialverteilung ab. Dieser Fehler wiederholt sich dann zyklisch mit jedem Umlauf der Heizstrecke, also für jeden Behälter, der aus einem Vorformling hergestellt wird, der zuvor an dem Transportelement mit der Nummer 140 angeordnet war. Die Erfindung betrifft natürlich auch den Fall einer einreihigen Führung der Vorformlinge durch die Heizstrecke.

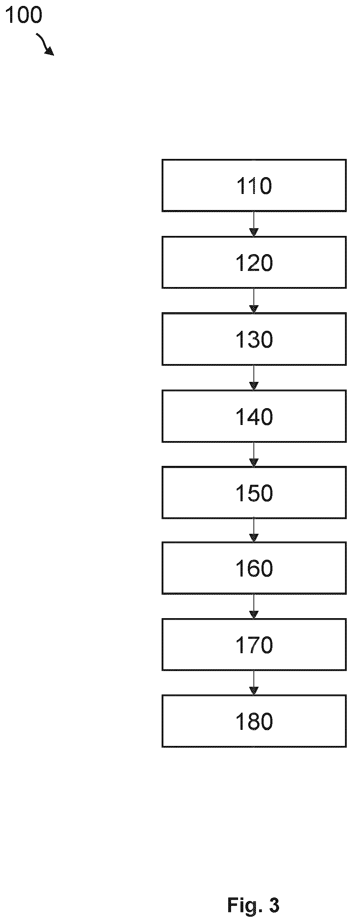

Fig. 3 zeigt einen Ablauf eines beispielhaften Verfahrens 100 zur Herstellung von Behältern 14 aus Vorformlingen 12, umfassend folgende Schritte:

In einem Schritt 110, Bewegen der Vorformlinge 12 relativ zu einer Temperiervorrichtung 28 mittels einer Transportvorrichtung 30 mit mehreren Transportelementen, wobei die Vorformlinge 12 jeweils an einem der Transportelemente angeordnet sind, wobei die Transportelemente in einem Herstellungsbetrieb auf einer umlaufenden Bahn zyklisch mit einer Umlauffrequenz entlang der Temperiervorrichtung bewegt werden.

In einem Schritt 120, Temperieren der Vorformlinge 12 mittels der Temperiervorrichtung 28.

In einem Schritt 130, Ermitteln von Ist-Werten für die Vorformlinge 12 und/oder für die aus den Vorformlingen hergestellten Behälter 14 und/oder von den Umformungsvorgang charakterisierenden Kenngrößen mittels einer Messeinrichtung 50.

In einem Schritt 140, Ermitteln von Abweichungen zwischen den Ist-Werten und einem zuvor definierten Soll-Wert oder einem zuvor definierten Soll-Bereich.

In einem Schritt 150, Feststellen, ob eine mit der Umlauffrequenz der Transportelemente zyklisch auftretende Abweichung zwischen den Ist-Werten und dem Soll-Wert oder dem Soll-Bereich vorliegt.

In einem Schritt 160, Herstellen einer Korrelation zwischen der zyklisch auftretenden Abweichung und einem zugeordneten Transportelement.

In einem Schritt 170, Ermitteln, welcher Eingriff in einen Umformprozess erforderlich ist, um die zyklisch auftretende Abweichung auszugleichen oder zu kompensieren.

In einem Schritt 180, Anwenden des Eingriffs mittels Anpassen mindestens eines Prozessparameters für Umformprozesse, in denen Vorformlinge 12, die an dem zugeordneten Transportelement angeordnet waren, zu einem Behälter 14 umgeformt werden.

### Bezugszeichenliste

- 10: Vorrichtung
- 12: Vorformlinge
- 14: Behälter
- 16: Umformstation
- 20: Arbeitsrad
- 22: Zuführeinrichtung
- 24: Übergaberad
- 26: Temperiervorrichtung
- 28: Heizelemente
- 30: Transportvorrichtung
- 32: Übergaberad
- 34: Entnahmerad
- 36: Ausgabestrecke
- 48: Sensor
- 50, 50': Messeinrichtung
- 60: Steuerungseinheit
- 61: Temperaturachse
- 62: Transportelementachse
- 71, 72: Temperaturkurve
- 73: Bereich abweichender Temperatur
- 100: Verfahren
- 110-180: Verfahrensschritte

## Patentansprüche

1. Verfahren (100) zur Herstellung von Behältern (14) aus Vorformlingen (12), umfassend folgende Schritte:
- Bewegen (110) der Vorformlinge (12) relativ zu einer Temperiervorrichtung (28) mittels einer Transportvorrichtung (30) mit mehreren Transportelementen, wobei die Vorformlinge (12) jeweils an einem der Transportelemente angeordnet sind, wobei die Transportelemente in einem Herstellungsbetrieb auf einer umlaufenden Bahn zyklisch mit einer Umlauffrequenz entlang der Temperiervorrichtung bewegt werden,
- Temperieren (120) der Vorformlinge (12) mittels der Temperiervorrichtung (28),
- Ermitteln (130) von Ist-Werten für die Vorformlinge (12) und/oder für die aus den Vorformlingen hergestellten Behälter (14) und/oder von den Umformungsvorgang charakterisierenden Kenngrößen mittels einer Messeinrichtung (50, 50'),
**gekennzeichnet durch**
- Ermitteln (140) von Abweichungen zwischen den Ist-Werten und einem zuvor definierten Soll-Wert oder einem zuvor definierten Soll-Bereich,
- Feststellen (150), ob eine mit der Umlauffrequenz der Transportelemente zyklisch auftretende Abweichung zwischen den Ist-Werten und dem Soll-Wert oder dem Soll-Bereich vorliegt,
- Herstellen (160) einer Korrelation zwischen der zyklisch auftretenden Abweichung und einem zugeordneten Transportelement,
- Ermitteln (170), welcher Eingriff in einen Umformprozess erforderlich ist, um die zyklisch auftretende Abweichung auszugleichen oder zu kompensieren,
- Anwenden (180) des Eingriffs mittels Anpassen mindestens eines Prozessparameters für Umformprozesse, in denen Vorformlinge (12), die an dem zugeordneten Transportelement angeordnet waren, zu einem Behälter (14) umgeformt werden.

2. Verfahren nach dem vorhergehenden Anspruch,
wobei der mindestens eine Prozessparameter mittels einer Steuerungseinheit (60) verstellt wird.

3. Verfahren nach einem der vorhergehenden Ansprüche,
wobei das Ermitteln (130) der Ist-Werte jeweils eine Messung einer Temperatur oder eines Temperarturprofils des temperierten Vorformlings (12) umfasst, insbesondere mittels eines Pyrometers, wobei vorzugsweise der Ist-Wert eine gemessene Temperatur oder ein gemessenes Temperaturprofil des temperierten Vorformlings (12) ist und der Soll-Wert eine Soll-Temperatur oder ein Soll-Temperaturprofil und/oder der Soll-Bereich ein Soll-Temperaturbereich oder ein Soll-Temperaturprofilbereich ist, und/oder
wobei das Ermitteln (130) der Ist-Werte jeweils eine Messung einer Reckkraft, die beim Recken des Vorformlings (12) entlang seiner Längsachse mit einer Reckstange aufgewendet wird, umfasst, wobei vorzugsweise der Ist-Wert eine gemessene Reckkraft ist und der Soll-Wert eine Soll-Reckkraft ist und/oder der Soll-Bereich ein Soll-Kraftbereich ist, und/oder
wobei das Ermitteln (130) der Ist-Werte jeweils eine Messung eines Ausformdrucks, der beim Umformen des Vorformlings (12) in einen Behälter (14) aufgebracht wird, umfasst, wobei vorzugsweise der Ist-Wert ein gemessener Umformdruck ist und der Soll-Wert ein Soll-Umformdruck ist und/oder der Soll-Bereich ein Soll-Umformdruckbereich ist.

4. Verfahren nach einem der vorhergehenden Ansprüche,
wobei der mindestens eine Prozessparameter ausgewählt ist aus der folgenden Gruppe:
- ein Vorblasdruck, insbesondere im Bereich von 5 bar bis 25 bar;
- ein Zeitpunkt zum Aufbringen eines Vorblasdrucks, insbesondere zum Öffnen eines Vorblasdruckventils, und/oder eine Zeitdauer des Aufbringens des Vorblasdrucks;
- ein Parameter, der eine Reckbewegung einer Reckstange beeinflusst, insbesondere eine Reckgeschwindigkeit, mit der der Vorformling (12) entlang seiner Längsachse mit der Reckstange gereckt wird;
- ein Zeitabstand zwischen einem Öffnen eines Vorblasdruckventils zum Aufbringen eines Vorblasdrucks und einem Beginn einer Reckbewegung, die von einer Reckstange ausgeführt wird;
- eine definierte Position der Reckstange, wobei die definierte Position der Reckstange insbesondere einen bestimmten Abstand zum Ende der Reckbewegung und/oder zum Boden der Blasformkavität aufweist;
- eine Menge, insbesondere ein Volumen, eines in den Vorformling (12) einströmenden Gases.

5. Verfahren nach einem der vorhergehenden Ansprüche,
wobei das Anpassen (150) mindestens eines Prozessparameters ein Anpassen eines Startzeitpunkts, zu dem ein Vorblasdruck in dem Vorformling aufgebracht wird, umfasst, vorzugsweise mittels Steuerung eines Vorblasdruckventils, und/oder das Anpassen mindestens eines Prozessparameters ein Anpassen einer definierten Position der Reckstange umfasst, wobei die definierte Position insbesondere ein bestimmter Abstand vom Endpunkt der Reckbewegung und/oder zum Boden der Blasformkavität ist.

6. Verfahren nach einem der vorhergehenden Ansprüche,
wobei die Vorformlinge ein thermoplastisches Material, insbesondere PET, umfassen oder daraus bestehen.

7. Verfahren nach einem der vorhergehenden Ansprüche,
wobei der Umformprozess ein Befüllen des aus dem Vorformling umgeformten Behälters mit flüssigem Füllgut umfasst, und/oder
wobei das Umformen der Vorformlinge in einen Behälter jeweils gleichzeitig mit der Befüllung des Behälters mit Füllgut erfolgt, wobei insbesondere das Füllgut als Umformfluid für das Formen des Behälters dient.

8. Verfahren nach einem der vorhergehenden Ansprüche,
wobei die Transportelemente als Transportdorne ausgebildet sind, die an einer umlaufenden Förderkette angeordnet sind, wobei die Transportdorne bevorzugt wenigstens in einem Teilumlaufbereich der Förderkette zu einer Eigendrehung um ihre Längsachse angetrieben werden.

9. Verfahren nach einem der vorhergehenden Ansprüche,
wobei die Temperiervorrichtung Heizelemente, insbesondere Infrarot-Strahler und/oder Licht emittierende Dioden und/oder Nahinfrarot-Strahler, umfasst.

10. Vorrichtung zur Herstellung von Behältern (14) aus Vorformlingen (12), wobei die Vorrichtung vorzugsweise ausgebildet ist zur Ausführung eines Verfahrens nach einem der vorhergehenden Ansprüche, die Vorrichtung umfassend
- eine Transportvorrichtung (30) mit mehreren Transportelementen, wobei die Transportvorrichtung ausgebildet ist, um die Vorformlinge (12) relativ zu einer Temperiervorrichtung (28) zum Temperieren der Vorformlinge (12) zu bewegen, wobei die Transportvorrichtung ausgebildet ist, um die Transportelemente in einem Herstellungsbetrieb auf einer umlaufenden Bahn zyklisch mit einer Umlauffrequenz entlang der Temperiervorrichtung zu bewegen,
- eine Messeinrichtung (50, 50'), die ausgebildet ist, um Ist-Werte für die Vorformlinge (12) und/oder für die aus den Vorformlingen hergestellten Behälter (14) und/oder von den Umformungsvorgang charakterisierenden Kenngrößen zu ermitteln,
**gekennzeichnet durch**
eine Steuerungseinheit (60), die ausgebildet ist, um
∘ Abweichungen zwischen den Ist-Werten und einem zuvor definierten Soll-Wert oder einem zuvor definierten Soll-Bereich zu ermitteln,
∘ festzustellen, ob eine mit der Umlauffrequenz der Transportelemente zyklisch auftretende Abweichung zwischen den Ist-Werten und dem Soll-Wert oder dem Soll-Bereich vorliegt,
∘ eine Korrelation herzustellen zwischen der zyklisch auftretenden Abweichung und einem zugeordneten Transportelement,
∘ zu ermitteln, welcher Eingriff in einen Umformprozess erforderlich ist, um die zyklisch auftretende Abweichung auszugleichen oder zu kompensieren,
∘ den Eingriff anzuwenden mittels Anpassen mindestens eines Prozessparameters für Umformprozesse, in denen Vorformlinge (12), die an dem zugeordneten Transportelement angeordnet waren, zu einem Behälter (14) umgeformt werden.

11. Verwendung einer Vorrichtung nach dem vorhergehenden Anspruch zum Herstellen von mit flüssigem Füllgut befüllten Behältern (14) aus thermisch konditionierten Vorformlingen (12) mittels Einleiten eines Füllguts unter Druck in die Vorformlinge (12), insbesondere zum Herstellen von mit flüssigem Füllgut, beispielsweise Trinkwasser, befüllten Flaschen aus einem thermoplastischen Material, insbesondere umfassend oder bestehend aus PET.

## Claims

1. A method (100) for the manufacture of containers (14) from preforms (12), comprising the following steps:
- moving (110) of the preforms (12) relative to a tempering device (28) by means of a transport device (30) with a plurality of transport elements, wherein the preforms (12) are each arranged on one of the transport elements, wherein the transport elements are cyclically moved along the tempering device in a manufacturing plant on a circumferential path with a rotational frequency,
- tempering (120) of the preforms (12) by means of the tempering device (28),
- determining (130) of actual values for the preforms (12) and/or for the containers (14) produced from the preforms and/or of characteristic variables characterizing the forming process by means of a measuring device (50, 50'),
**characterized by**
- determining (140) deviations between the actual values and a previously defined target value or range,
- determining (150) whether there is a cyclical deviation between the actual values and the target value or the target range, which occurs cyclically with the circulation frequency of the transport elements,
- establishing (160) a correlation between the cyclically occurring deviation and an assigned transport element,
- determine (170) what intervention in a forming process is necessary to compensate for or compensate for the cyclically occurring deviation,
- applying (180) the intervention by adjusting at least one process parameter for forming processes in which preforms (12) arranged on the assigned transport element are formed into a container (14).

2. The method according to the preceding claim, wherein at least one process parameter is adjusted by means of a control unit (60).

3. The method according to any one of the preceding claims, wherein the determination (130) of the actual values each comprises a measurement of a temperature or a temperature profile of the tempered preform (12), in particular, by means of a pyrometer, wherein, preferably, the actual value is a measured temperature or temperature profile of the tempered preform (12) and the target value is a target temperature or temperature profile and/or the target range is a is a target temperature range or a target temperature profile range, and/or
wherein the determination (130) of the actual values each comprises a measurement of a stretching force applied when stretching the preform (12) along its longitudinal axis with a horizontal bar, wherein, preferably, the actual value is a measured stretching force and the target value is a target stretching force and/or the target range is a target force range, and/or wherein the determination (130) of the actual values each comprises a measurement of a forming pressure applied during the forming of the preform (12) into a container (14), wherein preferably the actual value is a measured forming pressure and the target value is a target forming pressure and/or the target range is a target forming pressure range.

4. The method according to any one of the preceding claims, wherein at least one process parameter is selected from the following group:
- a pre-blow pressure, particularly in the range of 5 bar to 25 bar;
- a time for applying a pre-blow pressure, in particular, for opening a pre-blow pressure valve, and/or a period of time for applying the pre-blow pressure;
- a parameter influencing a stretching motion of a horizontal bar, in particular a stretching speed at which the preform (12) is stretched along its longitudinal axis with the horizontal bar;
- a time interval between an opening of a pre-blow pressure valve to apply a pre-blow pressure and the start of a stretching movement performed by a horizontal bar;
- a defined position of the horizontal bar, wherein the defined position of the horizontal bar has in particular a certain distance to the end of the stretching movement and/or to the bottom of the blow moulding cavity;
- a quantity, in particular, a volume, of a gas flowing into the preform (12).

5. The method according to any one of the preceding claims, wherein the adjustment (150) of at least one process parameter comprises an adjustment of a start time at which a pre-blow pressure is applied in the preform, preferably by means of control of a pre-blow pressure valve, and/or the adjustment of at least one process parameter comprises an adjustment of a defined position of the horizontal bar, wherein the defined position in particular a certain distance from the end point of the stretching movement and/or to the bottom of the blow moulding cavity.

6. The method according to any one of the preceding claims, wherein the preforms comprise or consist of a thermoplastic material, in particular, PET.

7. The method according to any one of the preceding claims, wherein the forming process comprises a filling of the container formed from the preform with liquid filling material, and/or
wherein the forming of the preforms into a container takes place simultaneously as the filling of the container with the filling material, wherein the filling material in particular serves as the forming fluid for the forming of the container.

8. The method according to any one of the preceding claims, wherein the transport elements are designed as transport mandrels arranged on a circumferential conveyor chain, wherein the transport mandrels are preferably driven to a self-rotation around their longitudinal axis at least in a partial circulation area of the conveyor chain.

9. The method according to any one of the preceding claims, wherein the tempering device comprises heating elements, in particular infrared emitters and/or light-emitting diodes and/or near-infrared emitters.

10. A device for manufacturing containers (14) from preforms (12), wherein the device is preferably designed for carrying out a process according to any one of the preceding claims, the device comprising
- a transport device (30) comprising a plurality of transport elements, wherein the transport device is designed to move the preforms (12) relative to a tempering device (28) for tempering the preforms (12), wherein the transport device is designed to move the transport elements in a manufacturing plant on a circumferential path cyclically with a rotational frequency along the tempering device,
- a measuring device (50, 50') designed to determine actual values for the preforms (12) and/or for the containers (14) made from the preforms and/or for the parameters characterising the forming process,
**characterized by**
a control unit (60) which is designed to
o determine deviations between the actual values and a previously defined target value or range,
o determine whether there is a cyclical deviation between the actual values and the target value or the target range, which occurs cyclically with the rotation frequency of the transport elements,
o establish a correlation between the cyclically occurring deviation and an associated transport element,
o determine what intervention in a forming process is necessary to compensate for or compensate for the cyclically occurring deviation,
o apply the intervention by adjusting at least one process parameter for forming processes in which preforms (12) arranged on the assigned transport element are formed into a container (14).

11. The use of an device according to the preceding claim for the manufacture of containers (14) filled with liquid filling material from thermally conditioned preforms (12) by introducing a filling material under pressure into the preforms (12), in particular, for the manufacture of bottles filled with liquid filling material, e.g., drinking water, from a thermoplastic material, in particular consisting of PET, consisting of PET.

## Revendications

1. Procédé (100) de fabrication de récipients (14) à partir de préformes (12) comprenant les étapes suivantes :
- déplacement (110) des préformes (12) relativement à un dispositif de tempérage (28) au moyen d'un dispositif de transport (30) avec plusieurs éléments de transport, les préformes (12) étant respectivement agencés sur l'un des éléments de transport, les éléments de transport étant, au cours d'une production, déplacés de manière cyclique avec une certaine fréquence de circulation sur une trajectoire circulaire le long du dispositif de tempérage,
- régulation de température (120) des préformes (12) au moyen du dispositif de tempérage (28),
- détermination (130) au moyen d'un système de mesure (50, 50') de valeurs effectives pour les préformes (12) et/ou pour les récipients (14) produits à partir des préformes et/ou des paramètres caractérisant le processus de formage,
**caractérisé par**
- la détection d'écarts entre les valeurs effectives et une valeur de consigne précédemment définie ou une plage de consigne précédemment définie,
- la constatation (150) de la survenance cyclique avec la fréquence de circulation des éléments de transport d'un écart entre les valeurs effectives et la valeur de consigne ou la plage de consigne,
- l'établissement (160) d'une corrélation entre la survenance cyclique de l'écart et un élément de transport correspondant,
- la détermination (170) du type d'intervention dans le processus de formage nécessaire pour niveler ou compenser l'écart cyclique,
- l'application (180) de l'intervention par l'adaptation d'au moins un paramètre des processus de formage dans le cadre desquels les préformes (12) agencés sur l'élément de transport correspondant sont transformées en récipients (14).

2. Procédé selon la revendication précédente,
le paramètre de processus au moins en question étant ajusté au moyen d'une unité de commande (60).

3. Procédé selon l'une des revendications précédentes,
la détermination (130) des valeurs effectives comprenant respectivement une mesure d'une température ou d'un profil de températures de la préforme (12) tempérée, notamment au moyen d'un pyromètre, la valeur effective étant de préférence une température mesurée ou un profil de températures mesuré de la préforme (12) tempérée et la valeur de consigne de préférence une température de consigne ou un profil de températures de consigne et/ou la plage de consigne étant de préférence une plage de températures de consigne ou une plage de profils de températures de consigne, et/ou
la détermination (130) des valeurs effectives comprenant respectivement une mesure d'une force d'étirage appliquée par une barre d'étirage lors de l'étirage de la préforme (12) le long de son axe longitudinal, la valeur effective étant de préférence une force d'étirage mesurée et la valeur de consigne de préférence une force d'étirage de consigne et/ou la plage de consigne étant de préférence une plage de forces de consigne, et/ou
la détermination (130) des valeurs effectives comprenant respectivement une mesure d'une pression de formage appliquée lors de la transformation de la préforme (12) en un récipient (14), la valeur effective étant de préférence une pression de formage mesurée et la valeur de consigne de préférence une pression de formage de consigne et/ou la plage de consigne étant de préférence une plage de pressions de formage de consigne.

4. Procédé selon l'une des revendications précédentes,
le paramètre de processus au moins en question est choisi dans le groupe suivant :
- une pression de pré-soufflage, notamment dans la plage de 5 bars à 25 bars ;
- un moment pour l'application d'une pression de pré-soufflage, notamment pour ouvrir une valve de pression de pré-soufflage, et/ou une durée d'application de la pression de pré-soufflage ;
- un paramètre influant sur le mouvement d'étirage d'une barre d'étirage, notamment une vitesse d'étirage avec laquelle la préforme (12) est étirée le long de son axe longitudinal par la barre d'étirage ;
- un intervalle de temps entre une ouverture de la valve de pression de pré-soufflage pour l'application d'une pression de pré-soufflage et un début de mouvement d'étirage de la barre d'étirage ;
- une position définie de la barre d'étirage, la position définie de la barre d'étirage étant à une certaine distance de l'extrémité du mouvement d'étirage et/ou du fond de la cavité du moule de soufflage ;
- une quantité, notamment un volume d'un gaz affluant dans la préforme (12).

5. Procédé selon l'une des revendications précédentes,
l'adaptation (150) d'au moins un paramètre de processus comprenant une adaptation d'un instant de départ auquel une pression de pré-soufflage est appliquée dans la préforme, de préférence au moyen d'une commande de la valve de pression de pré-soufflage, et/ou l'adaptation d'au moins un paramètre de processus comprenant une adaptation d'une position définie de la barre d'étirage, la position définie étant notamment à une certaine distance de l'extrémité du mouvement d'étirage et/ou du fond de la cavité du moule de soufflage.

6. Procédé selon l'une des revendications précédentes,
les préformes comprenant un matériau thermoplastique, notamment du PET, ou étant constituées de ce matériau.

7. Procédé selon l'une des revendications précédentes,
le processus de formage comprenant un remplissage du récipient formé à partir de la préforme avec un produit de remplissage liquide, et/ou
la transformation des préformes en récipients ayant respectivement lieu simultanément avec le remplissage du récipient avec un produit de remplissage, le produit de remplissage faisant notamment fonction de fluide de formage pour le formage du récipient.

8. Procédé selon l'une des revendications précédentes,
les éléments de transport étant conçus sous forme de mandrins de transport agencés sur une chaîne de transport en circulation, les mandrins de transport étant de préférence entraînés pour effectuer une propre rotation autour de leur axe longitudinal, au moins sur une partie du circuit de la chaîne de transport.

9. Procédé selon l'une des revendications précédentes,
le dispositif de tempérage comportant des éléments de chauffage, notamment des radiateurs infrarouges et/ou des diodes électroluminescentes et/ou des radiateurs infrarouges proches.

10. Dispositif de fabrication de récipients (14) à partir de préformes (12), le dispositif étant de préférence conçu pour mettre en oeuvre un procédé selon l'une des revendications précédentes, le dispositif comprenant
- un dispositif de transport (30) avec plusieurs éléments de transport, le dispositif de transport étant conçu pour déplacer les préformes (12) relativement à un dispositif de tempérage (28) pour en réguler la température, le dispositif de transport étant conçu pour, au cours d'une production, déplacer les éléments de transport de manière cyclique avec une certaine fréquence de circulation sur une trajectoire circulaire le long du dispositif de tempérage,
- un système de mesure (50, 50')conçu pour déterminer des valeurs effectives pour les préformes (12) et/ou pour les récipients (14) produits à partir des préformes et/ou des paramètres caractérisant le processus de formage,
**caractérisé par**
une unité de commande (60) conçue pour
∘ détecter des écarts entre les valeurs effectives et une valeur de consigne précédemment définie ou une plage de consigne précédemment définie,
∘ constater s'il y a une survenance cyclique avec la fréquence de circulation des éléments de transport d'un écart entre les valeurs effectives et la valeur de consigne ou la plage de consigne,
∘ établir une corrélation entre la survenance cyclique de l'écart et un élément de transport correspondant,
∘ déterminer le type d'intervention dans le processus de formage nécessaire pour niveler ou compenser l'écart cyclique,
∘ appliquer l'intervention par l'adaptation d'au moins un paramètre des processus de formage dans le cadre desquels les préformes (12) agencées sur l'élément de transport correspondant sont transformées en récipients (14).

11. Utilisation d'un dispositif selon la revendication précédente pour la fabrication à partir de préformes (12) thermiquement conditionnées de récipients (14) remplis d'un produit de remplissage liquide par l'injection dans les préformes (12) d'un produit de remplissage sous pression, notamment pour la fabrication de bouteilles en matériau thermoplastique, notamment comprenant du PET ou constituées de ce matériau, remplies d'un produit de remplissage liquide, par exemple de l'eau de boisson.
